# NEUE EUROPÄISCHE PATENTSCHRIFT

(11) **EP 1 370 590 B2**
(45) Veröffentlichungstag und Bekanntmachung des Hinweises auf die Entscheidung über den Einspruch: **21.11.2012**
(45) Hinweis auf die Patenterteilung: 04.10.2006
(21) Anmeldenummer: 01986309.1
(22) Anmeldetag: 05.10.2001
(51) Int. Cl.: C08F 2/50

(54) **VERFAHREN ZUR HERSTELLUNG VON VERNETZTEN ACRYLATSCHMELZHAFTKLEBEMASSEN**
METHOD FOR PRODUCING CROSSLINKED ACRYLATE HOT-MELT ADHESIVE COMPOUNDS
PROCEDE DE PRODUCTION DE COMPOSES AUTOADHESIVES ACRYLATES RETICULES

(30) Priorität: 06.10.2000 DE 10049669
(43) Veröffentlichungstag der Anmeldung: 17.12.2003
(73) Patentinhaber: TESA SE, 20253 Hamburg (DE)
(72) Erfinder: CARTELLIERI, Ulf, 20537 Hamburg (DE); HUSEMANN, Marc, 22605 Hamburg (DE); RING, Christian, 20259 Hamburg (DE); ZÖLLNER, Stephan, 21244 Buchholz/Nordheide (DE)
(74) Vertreter: Stubbe, Andreas
(86) Internationale Anmeldenummer: PCT/EP2001/011503
(87) Internationale Veröffentlichungsnummer: WO 2002/028963

(56) Entgegenhaltungen:
- EP-A- 0 373 662
- WO-A1-93/09152
- DE-A1- 3 942 232
- JP-A- 05 032 952
- US-A- 4 672 079
- US-A- 5 416 127
- Fratelli Lamberti, Albizzate, Italy product information "Esacure KIP", 1991.

## Beschreibung

Durch UV-Strahlung vernetzbare Polyacrylate - insbesondere Haftklebemassen - sind bereits seit langem bekannt. Sie bieten diverse Vorteile gegenüber den konventionellen, thermisch vernetzbaren Systemen. So können UV-vernetzbare Acrylatpolymere, die beispielsweise aus der Lösung auf einen Träger flächig aufgebracht werden, durch Variation der Aktivatorkonzentration und der UV-Dosis in der gewünschten Weise vernetzt werden. Die Steuerung der Vernetzungsdichte und damit der Produkteigenschaften ist somit neben der Dosierung auch durch die Prozeßparameter - hier die UV-Dosis - leicht möglich. Derartig dynamisch steuerbare Polymersysteme bedeuten einen wesentlichen Vorteil in einer modernen Produktionsstruktur, wenn ein komplexes Produktportfolio ausgehend von wenigen Grundbausteinen realisiert werden soll.

Die UV-Vernetzung kann durch unterschiedliche Methoden erreicht werden. Im einfachsten Fall wird ein UV-Aktivator einem üblichen, gesättigten Polyacrylat zugesetzt. Dabei unterscheidet man Typ I- und Typ II-Aktivatoren: erstere spalten nach der UV-Aktivierung, letztere abstrahieren nach der UV-Aktivierung Wasserstoffatome.
Es hat sich gezeigt, daß zugemischte Typ I-Photoinitiatoren in der Regel nicht in der Lage sind, vernetzungsfähige Radikale an einem gewöhnlichen gesättigten Polyacrylat zu erzeugen. Andere Konkurrenzreaktionen überwiegen. Setzt man hingegen einen Typ II-Photoinitiator zu, kann man bei einer nicht weiter modifizierten Polyacrylatmasse, beispielsweise bei einem Copolymerisat aus 2-Ethylhexylacrylat und Acrylsäure, eine Vernetzungsreaktion erreichen. Allerdings ist diese nur von geringer Effizienz, wenn zur Erhöhung der Klebkraft Harze beigemischt werden. Dies liegt insbesondere darin begründet, daß die Harze UV-Licht absorbieren, einen stark regelnden Einfluß haben und somit die UV-Vernetzung negativ beeinflussen oder sogar verhindern. Auch der Zusatz von multifunktionellen Acrylaten oder Methacrylaten zur Steigerung der Vernetzungseffizienz bewirkt nur wenig. Zudem können nicht umgesetzte Acrylatgruppen zu einer störenden Nachvernetzung führen, die nachteilig für die Stabilität der Produkteigenschaften ist.

Eine elegantere Methode liegt darin, vinylische Doppelbindungen von vornherein in das Acrylatpolymer einzubauen, um die Vernetzung zu erleichtern.
Die US 4,234,662 beschreibt ein Verfahren zur Herstellung von Heißschmelzklebemassen mit druckempfindlichen Eigenschaften, welches aus den folgenden Schritten besteht:
Copolymerisation von Allylacrylaten oder Methacrylaten mit zumindest einem copolymerisierbaren Acrylatmonomer, wodurch ein bei Raumtemperatur festes Prepolymer erhalten wird; Erwärmung des resultierenden festen allylisch ungesättigten Prepolymers auf eine Temperatur, bei der es flüssig und fließfähig ist, und Schichtung des flüssigen Prepolymers auf ein Substrat. Das beschichtete Substrat wird einer Elektronenstrahlung von 1 bis 4 Megarad ausgesetzt, welche in der Lage ist, das Prepolymer zu vernetzen, wobei eine gehärtete druckempfindliche Klebmasse entsteht. Nachteil dieses Verfahrens ist die schwierige Durchführbarkeit, da die Polymerisate während der radikalisch initiierten Polymerisation und während der Schmelzbeschichtung zur Gelbildung neigen.
In den US 5,391,406 und US 5,416,127 wird daher vorgeschlagen, die polymergebundenen Vinylgruppen gezielt durch eine polymeranaloge Reaktion mit Dimethyl-meta-isopropylenyl-benzyl-isocyanat (m-TMI) einzubauen. Derartig funktionalisierte Polymere lassen sich aus der Schmelze ohne Gelbildung beschichten, da die Ceilingtemperatur der thermischen Polymerisation der Isopropenylgruppe unterhalb der Beschichtungstemperatur liegt. Wird dem Polymer ein Photoinitiator zugesetzt, ist die Masse UV-vernetzbar. Dennoch weist auch diese Methode praktische Nachteile auf: Zum einen ist der beschrittene Prozeß über die polymeranaloge Reaktion sehr aufwendig und daher umständlich, zum anderen sind hochmolekulare mit Doppelbindungen funktionalisierte Polymere, wie sie hierbei entstehen, besonderes scheranfällig bei hohen Temperaturen und führen daher zu einer starken unerwünschten Vergelung während einer Verarbeitung im Heißschmelz-Prozeß, wo aufgrund der Verarbeitung im Extruder hohe Scherkräfte wirken.
Copolymerisierbare Photoinitiatoren erleichtern ebenfalls die Vernetzung. So beschreibt die DE 24 43 414 A1 ein Verfahren zur Herstellung von mit einer Klebemasse auf Basis vernetzter Polyacrylsäurederivate selbstklebend ausgerüsteten Produkten wobei die Klebemasse 0,01 bis 5 % eines Acrylsäure- oder Methacrylsäure-[(2-alkoxy-2-phenyl-2-benzoyl)-ethyl]esters als Photoinitiator einpolymerisiert enthält und durch kurzzeitige Bestrahlung mit ultraviolettem Licht vernetzt wird.
Die dort als polymerisationsfähige Photosensibilisatoren verwendeten (Meth-)Acrylsäureester sind allerdings nur durch mehrstufige Synthese mit relativ schlechter Ausbeute zugänglich und zudem nicht sehr effizient in der UV-Vernetzung.
In der DE 27 43 979 A1 wird zur Verbesserung ein Verfahren zur Herstellung von mit einer Selbstklebemasse auf Basis vernetzter Polyacrylsäure-Derivate beschichteten Produkten durch Einpolymerisation eines Photoinitiators in die Klebemasse und anschließende Vernetzung auf dem Trägermaterial durch kurzfristige UV-Bestrahlung beschrieben, bei dem als Photoinitiator 0,01 bis 5 Gew.-% Benzoinacrylat oder -methacrylat in die Selbstklebemasse einpolymerisiert werden.
Die in diesen Patenten beschriebenen Klebemassen werden bevorzugt durch Polymerisation in der Lösung hergestellt und dann aus der Lösung auf einen Träger beschichtet. Erst die getrocknete Schicht kann dann einer UV-Bestrahlung unterworfen werden. Allgemein weisen aber die copolymerisierten Photoinitiatoren einen Nachteil auf: Man ist in der Herstellung eines UV-vernetzenden Acrylathaftklebesystems sehr eingeschränkt, da nur sehr wenige Photoinitiatoren ohne große Umstände und daher wirtschaftlich interessant als copolymerisierbare Verbindungen zugänglich sind.
Die EP 0 578 151 B1 beschreibt die Verwendung von Haftklebern auf Polyacrylatbasis mit einpolymerisierten Benzoinderivaten zur großtechnischen kontinuierlichen Schmelzbeschichtung von Medical-Produkten mit anschließender Vernetzung des Klebers durch UV-Bestrahlung. Auch hier gelten die oben erwähnten Einschränkungen bezüglich der Verfügbarkeit wirtschaftlich interessanter Photoinitiatoren.

Die BASF AG beschreibt einpolymerisierbare Benzophenonderivate, die nach der UV-Bestrahlung Wasserstoffatome abstrahieren können (EP 0 343 467; US 5,047,443; US 5,264,533). Im Gegensatz zu den spaltbaren Aktivatoren werden durch diese Photoaktivatoren keine niedermolekularen Bestandteile gebildet, die aus der gehärteten Masseschicht ausdampfen können und deren Eigenschaften negativ beeinflussen. So bildet sich nach der UV-Bestrahlung der unter anderem in dem Patent DE 27 43 979 A1 beschriebenen Systeme Benzaldehyd, welches als störender Geruch wahrgenommen werden kann.

Alle im bisherigen beschriebenen Photoinitiatoren beziehungsweise die aus ihnen hergestellten UV-vernetzbaren Acrylatprepolymere haben eine deutliche Beschränkung hinsichtlich des Wellenlängenbereiches, welcher für die Vernetzungsreaktion eine auslösende Wirkung besitzt Jeder in das System durch Copolymerisation eingebaute Photoinitiator gibt den im weiteren zur Vernetzung zur Verfügung stehenden Wellenlängenbereich durch sein Absorptionsmaximum vor.
Hieraus ergibt sich eine Einschränkung, wenn dieses Acrylatprepolymer beispielsweise in dickerer Schicht, als harzabgemischte Polymermasse oder mit Pigmenten versehen mittels ultravioletter Strahlung vernetzt werden soll. So kann die Vielzahl der herkömmlichen Systeme nur bis zu einer begrenzten Schichtdicke ausreichend vernetzt werden (beispielsweise das System aus der oben erwähnten DE 27 43 979 A1 bis zu einer Schichtdicke von 50 µm). Für dickere Schichten weist das Polymer in einem Wellenlängenbereich, in dem der Photoinitiator aktiv ist, keine ausreichende UV-Licht-Durchlässigkeit mehr auf. Pigmentierte Schichten, beispielsweise aus durch Titandioxid weißgefärbten Polymermassen, lassen sich in einem Wellenlängenbereich von 250 nm (Absorptionsmaximum der oben erwähnten Benzoinacrylate) gar nicht mehr UV-vernetzen.

Die US 5,194,455 beschreibt ein Verfahren zur Herstellung von druckempfindlichen Heißschmelzklebern auf Acrylatbasis durch Bestrahlung eines Substrates, bei welchem mindestens ein Acrylmonomer mit N-tert-Butylacrylamid (TBA) copolymerisiert wird, wobei die zu polymerisierende Reaktionsmischung zusätzlich eine oder mehrere ethylenisch ungesättigte Verbindungen enthalten kann, welche nicht zur Gruppe der oben erwähnten Acrylmonomere gehören, das resultierende feste Polymer erwärmt und in einem fließfähigen oder flüssigen Zustand auf ein Substrat gebracht wird, wobei Additive und Hilfsstoffe enthalten sein können, und das beschichtete Substrat mit hochenergetischer Strahlung bestrahlt wird.
In der WO 96/35725 wird ein vernetztes, pigmentiertes, druckempfindliches Klebemittel beansprucht, welches ein auf ein Substrat geschichtetes und derart durch UV-Strahlung gehärtetes Copolymer enthält, daß es bei 70 °C eine Scherfestigkeit von mindestens 20 Stunden besitzt, wobei dieses Copolymer ein Pigment, einen Wasserstoff-abstrahierenden Photoinitiator und ein Copolymer auf Acrylatbasis enthält, wobei das Copolymer aus einer im wesentlichen säurefreien Monomermischung hergestellt ist, welche sich wie folgt zusammensetzt:
(i) ca. 30 bis 99,99 Gew.-% mindestens eines Alkylacrylats, wobei die Alkylgruppe 1 bis 24 C-Atome besitzt,
(ii) ca. 0,01 bis 15 Gew.-% eines eine tertiäre Amingruppe beinhaltenden Monomers,
(iii) 0 bis 25 Gew.-% mindestens eines polaren Vinylmonomers und
(iv) 0 bis 30 Gew.-% eines Diesters einer ethylenisch ungesättigten Dicarbonsäure, jeweils bezogen auf das Totalgewicht des Monomers.
Zur Vernetzung von Schichten dieser Polyacrylate sind langwellige UV-Aktivatoren, wie Isopropylthioxanthon, notwendig. Nachteilig an einpolymerisierten Dimethylaminoalkylverbindungen ist die Beschränkung auf carbonsäurefreie Comonomere, wie in allen Ausführungen in der WO 96/35725 geschehen. Beispielsweise führt die thermisch initiierte Lösungspolymerisation von Acrylatmonomeren, Acrylsäure und olefinisch ungesättigten Dimethylaminoalkylverbindungen nach kurzer Reaktionszeit zu starkem Viskositätsanstieg und zur Vergelung.

Gerade polare und im speziellen carbonsäurehaltige Acrylatpolymere sind besonders vorteilhaft für Hochleistungsklebemassen. Innere Festigkeit, die durch interpolymere Wasserstoffbrückenbindungen deutlich beeinflußt wird, kann zusätzlich zur eigentlichen Vernetzung am effizientesten durch einpolymerisierbare Acrylsäure unterstützt werden. Auch das für Polyacrylat bekannte Aufziehverhalten, durch welches eine Verstärkung der Verklebungsfestigkeit erreicht wird, verbessert sich wesentlich bei Anwesenheit von nennenswerten Anteilen an einpolymerisierter Acrylsäure.

Insbesondere für gesättigte Systeme eignen sich die gängigen Initiatoren nicht oder nur dann, wenn durch Comonomere oder benachbarte Elektronendonorgruppen eine Aktivierung des zu vernetzenden Systems erfolgt. Daher wurde bisher noch kein UV-Vernetzungssystem beschrieben, welches in der Lage ist, Polyacrylate ohne funktionelle Comonomere effizient zu vernetzen.

Nachteilig der im allgemeinen angewendeten Photoinitiatoren ist es weiterhin für die Vielzahl dieser Initiatoren, daß sie den Heißschmelzprozeß nicht überstehen, daß sie also bei Erwärmung auf Temperaturen, wie sie bei derlei Verfahren üblich sind, ihre Reaktivität als Vernetzungsstarter verlieren.
Benzoin- und Benzilderivate sind nicht für hohe Reaktionstemperaturen geeignet. So werden in "Chemistry & technology of UV & EB Formulation For Coatings, Inks and Paints, Volume 5, PKT Oldering, 1994" als häufig eingesetzte Typ-I-Photoinitiatoren beispielsweise Benzoinmethylether und Benzildimethylketal genannt. Beide Photoinitiatoren lassen sich für den Heißschmelzprozeß nicht oder nur in sehr beschränkter Weise einsetzen, da sie über einen längeren Zeitraum nicht stabil sind und sich zersetzen. Dies gilt insbesondere in acrylsäurehaltigen Systemen, welche bei Polyacrylathaftklebemassen in der Regel die Basis stellen.
Benzophenon als wasserstoffabstrahierender Initiator (Typ II) weist zwar eine höhere thermische Stabilität auf, sublimiert aber hochgradig unter thermischer Belastung und unter Vakuum aus der Acrylathaftklebemasse. Entsprechend verhält sich Campherchinon, welches ebenfalls nur ein relativ geringes Molekulargewicht aufweist und daher unter Vakuum bei erhöhten Temperaturen dazu neigt, sich aus der zu vernetzenden Masse zu verflüchtigen.

Aufgabe der Erfindung ist es, ein Verfahren zur Herstellung einer Polyacrylathaftklebemasse anzubieten, bei welchem ein vernetzbares gesättigtes Polyacrylatsystem im Heißschmelzprozeß verarbeitet und anschließend vernetzt werden kann. Dieses System soll über eine längere Zeitdauer stabil gegenüber den drastischen Bedingungen des Heißschmelzprozesses sein, also eine entsprechend hohe Topfzeit aufweisen. Eine Vergelung des Polyacrylatsystems während des Heißschmelzprozesses soll dabei - zumindest weitgehend - vermieden werden. Dabei ist es angestrebt, eine Vernetzungsmethode zu finden, welche einerseits auf die Anwesenheit von zusätzlichen die Vernetzung aktivierenden Gruppen oder Komponenten verzichten kann. Der Vernetzungsprozeß soll durch die Anwesenheit von Additivstoffen in der Haftklebemasse nicht oder nur unwesentlich beeinträchtigt werden.

Gelöst wird diese Aufgabe überraschend und für den Fachmann nicht vorhersehbar durch ein Verfahren, wie es im Hauptanspruch beschriebenen ist. Die Unteransprüche betreffen vorteilhafte Varianten dieses Verfahrens. Weiterhin wird die Verwendung eines oligomer vorliegenden polyfunktionellen α-Spalters beansprucht.

Dementsprechend betrifft der Hauptanspruch ein Verfahren zur Herstellung einer Polyacrylathaftklebemasse über ein Heißschmelzverfahren, bei welchem ein oligomer vorliegender polyfunktioneller α-Spalter vor der Verarbeitung im Heißschmelzverfahren zu dem zu vernetzenden Polymer gegeben wird und die UV-Vernetzung nach der Verarbeitung im Heißschmelzverfahren durchgeführt wird, wobei das zu vernetzende Polymer ein gesättigtes System ist.

Als α-Spalter werden als Initiatoren fungierende Verbindungen bezeichnet, welche während des Initiierungsschrittes, beispielsweise durch ultraviolette Bestrahlung, intramolekular spalten und dabei in radikalische Fragmente zerfallen, wobei die Bindung zu dem in α-Position zu einer die Radikalbildung aktivierenden Gruppe, insbesondere zu einer Carbonylgruppe stehenden Kohlenstoffatom oder Heteroatom aufgespalten wird.

Sehr bevorzugt wird als α-spaltender Initiator ein α-Hydroxyketon im Sinne der vorliegenden Erfindung verwendet.

In einer besonders günstigen Ausführungsform des erfinderischen Verfahrens wird als α-Hydroxyketon Oligo[2-hydroxy-2-methyl-1-[4-(1-methylvinyl)phenyl]propanon] eingesetzt:

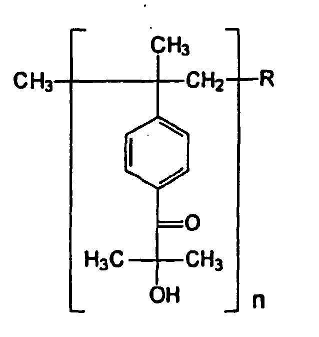

Es ist vorteilhaft, wenn der α-Spalter zu 0,1 bis 5 Gew.-%, insbesondere von 0,25 bis 1 Gew.-%, jeweils bezogen auf das zu vernetzende Polymer, eingesetzt wird.

Maßgebend für das erfinderische Verfahren ist, daß der als Photoinitiator dienende α-Spalter, in bevorzugter Form das α-Hydroxyketon, nicht in das Prepolymer einpolymerisiert wird, sondern als separate Komponente nach der Polymerisation, aber vor der Vernetzung, zugemischt wird. Im Online-Betrieb ist dies gleichbedeutend mit einer Zugabe vor dem Heißschmelzprozeß, da die Vernetzung unmittelbar hierauf folgt.

Die verwendeten UV-Initiatoren sind im Prinzip für diese Funktion für Acrylatmassen bekannt. Nicht zu erwarten war, daß diese Initiatoren über eine längere Dauer die Bedingungen des Heißschmelzprozesses überstehen: So konnte über eine lange Zeitdauer überraschend weder eine Zersetzung oder sonstige Zerstörung festgestellt werden, noch verflüchtigten sich diese Initiatoren, wie es für die üblicherweise für den Heißschmelzprozeß verwendeten UV-Initiatoren in der Regel spätestens während des Aufkonzentrationsprozesses beobachtet wird.

Zur Erhöhung der Lebensdauer der Haftklebemassen und ihrer Vorprodukte sollten diese im Dunkeln aufbewahrt bzw. verarbeitet werden.

In einer weiteren sehr günstigen Ausführungsform des erfinderischen Verfahrens wird zur Herstellung des zu vernetzenden Polymers eine Monomermischung enthaltend zumindest die folgenden Komponenten eingesetzt
a) 65 bis 100 Gew.-% (Meth-)acrylsäure und (Meth-)Acrylsäurederivate der allgemeinen Formel 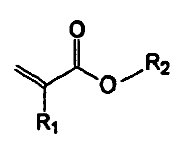 wobei R₁ = H oder CH₃ und R₂ eine Alkylkette mit 2 bis 20 C-Atomen ist,
b) 0 bis 35 Gew.-% Vinylverbindungen mit funktionellen Gruppen,
und zwar derart, daß die Summe aller eingesetzten Komponenten 100 Gew.-% ergibt.

Weiterhin ist es sehr von Vorteil, wenn zu dem zu vernetzenden Polymer 0,5 bis 40 Gew.-% eines oder mehrere Harze und/oder 0,1 bis 0,3 Gew.-% eines oder mehrerer - insbesondere oligomerer - Aminacrylate, jeweils bezogen auf das Prepolymer, zugegeben sind.

In einer für das Verfahren vorteilhaften Vorgehensweise wird die UV-Vernetzung mittels kurzzeitiger ultravioletter Bestrahlung in einem Wellenlängenbereich von 200 bis 400 nm, insbesondere unter Verwendung von Quecksilber-Hochdruck- oder -Mitteldruck-Lampen bei einer Leistung von 80 bis 200 W/cm, bewirkt.

Beansprucht wird weiterhin die Verwendung eines oligomer vorliegenden polyfunktionellen α-Spalters, besonders eines derart vorliegenden α-Hydroxyketons, insbesondere von Oligo[2-hydroxy-2-methyl-1-[4-(1-methylvinyl)-phenyl]propanon], als UV-Initiator für die Vernetzung von den Heißschmelzprozeß durchlaufende gesättigte Polyacrylathaftklebemassen. Dabei ist der α-Spalter nicht in das zu vernetzende Polymer einpolymerisiert.

Neben den oben dargestellten Polyacrylaten lassen sich zur Vernetzung nach dem erfinderischen Verfahren alle Acrylathaftklebemassen einsetzen, insbesondere solche, welche haftklebende Eigenschaften entsprechend des "Handbook of Pressure Sensitive Adhesive Technology" von Donatas Satas (van Nostrand, New York 1989) besitzen.

Die Herstellung des zu vernetzenden Polymers erfolgt bevorzugt über eine freie oder kontrollierte radikalische Polymerisation. Die Polymerisation kann in Polymerisationsreaktoren durchgeführt werden, die im allgemeinen mit einem Rührer, mehreren Zulaufgefäßen, Rückflußkühler, Heizung und Kühlung versehen sind und für das Arbeiten unter N₂-Atmosphäre und Überdruck ausgerüstet sind.
Die radikalische Polymerisation wird in Gegenwart eines oder mehrerer organischer Lösungsmittel und/oder in Gegenwart von Wasser oder in Substanz durchgeführt. Es wird dabei angestrebt, die verwendete Lösungsmittelmenge so gering wie möglich zu halten. Die Polymerisationszeit beträgt - je nach Umsatz und Temperatur - zwischen 6 und 48 Stunden. Das mittlere Molekulargewicht der Polymere variiert zwischen 300.000 und 2.000.000 g/mol, bevorzugt zwischen 600.000 und 1.200.000 g/mol.
Zur Lösungsmittelpolymerisation werden als Lösemittel vorzugsweise Ester gesättigter Carbonsäuren (wie Ethylacetat), aliphatische Kohlenwasserstoffe (wie n-Hexan oder n-Heptan), Ketone (wie Aceton oder Methylethylketon), Siedegrenzbenzin oder Gemische dieser Lösungsmittel verwendet. Sehr bevorzugt wird ein Lösungsmittelgemisch aus Aceton und Isopropanol eingesetzt, wobei der Isopropanolgehalt zwischen 1 und 10 Gewichtsprozent liegt. Als Polymerisationsinitiatoren werden übliche radikalbildende Verbindungen, wie beispielsweise Peroxide und Azoverbindungen, eingesetzt. Auch Initiatorgemische können verwendet werden. Bei der Polymerisation können auch Thiole als weitere Regler zur Molekulargewichtssenkung und Verringerung der Polydispersität eingesetzt werden. Als weitere sogenannte Polymerisationsregler können z.B. Alkohole und Ether verwendet werden.

Vorteilhaft können den Polymeren klebrigmachende Harze mit einem prozentualen Anteil von bis zu 40 Gew.-% zugesetzt werden. Hierzu sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C₅-, C₉- sowie andere Kohlenwasserstoffharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Sehr vorteilhaft ist die Zugabe von Aminacrylaten, insbesondere solcher, welche in oligomerer Form vorliegen, zu dem zu vernetzenden Polymer. Die Geschwindigkeit der Vernetzung kann hierdurch gesteigert werden. Als besonders geeignet haben sich die unter dem Handelsnamen Genomer^{™} angebotenen Produkte Genomer 5248^{™}, Genomer 5275^{™} und Genomer 5292^{™} der Firma Rahn herausgestellt. Bei der Zugabe der Aminacrylate ist zu beachten, daß mit Erhöhung der Geschwindigkeit der Vernetzung die Stabilität unter Heißschmelzbedingungen absinkt. Die Zugabe dieser Verbindungen erfolgt daher günstigerweise erst relativ kurz vor der Vernetzung.

Ein Vorteil durch die Zugabe der Beschleuniger ergibt sich durch eine erweiterte Auswahl der Acrylatcomonomere, die den bisherigen sich aus dem Stand der Technik ergebenden Beschränkungen nicht mehr unterliegen. So lassen sich beispielsweise auch carbonsäurehaltige Acrylatcomonomere mit in das Polymer einpolymerisieren, auch hier ist eine effiziente Vernetzung möglich, mit der sich hochscherfeste und stark klebrige Acrylathaftklebemassen realisieren lassen.

Zur Steigerung der Vernetzungseffizienz werden die unvernetzten Polymere optional mit Vernetzern abgemischt: Geeignete Vernetzersubstanzen in diesem Sinne sind beispielsweise bi- oder multifunktionelle Acrylate. Verwendet werden können hier aber auch alle weiteren, dem Fachmann geläufigen bi- oder multifunktionellen Verbindungen, die in der Lage sind, Polyacrylate zu vernetzen.

Die auf diese Weise abgemischten unvernetzte Polymere werden bevorzugt als Heißschmelzmasse (Hotmelt) auf einen Träger (PP, BOPP, PET, Vlies, PVC, Polyester, Schaum etc.) oder Trennpapier (Glassine, HDPE, LDPE) direkt aufgetragen oder umlaminiert. Die UV-Vernetzung findet dann vorteilhaft direkt auf diesem Träger statt. Werden wie oben beschrieben Aminacrylate hinzugegeben, so kann dies in hervorragender Form unmittelbar vor der Beschichtung geschehen, um die Zeit, der diese Verbindungen unter drastischen Reaktionsbedingungen ausgesetzt sind, auf ein Minimum zu reduzieren.

Die nach den erfinderischen Verfahren hergestellten Acrylathaftklebemassen können des weiteren mit einem oder mehreren Additiven wie (primären und sekundären) Alterungsschutzmitteln, Lichtschutzmitteln und Ozonschutzmitteln abgemischt sein.
Weiterhin können sie mit einem oder mehreren Füllstoffen wie Fasern, Ruß, Zinkoxid, Titandioxid, Mikrovollkugeln, Kieselsäure, Silikaten und Kreide gefüllt sein, wobei auch der Zusatz von blockierungsfreien Isocyanaten möglich ist.

Zur Dokumentation wurden die nachfolgend dargestellten Versuchsreihen durchgeführt.

### Beispiele

### Testmethoden

Folgende Testmethoden wurden angewendet, um die klebtechnischen Eigenschaften der hergestellten Haftklebemassen zu evaluieren.

### Scherfestigkeit (Test A)

Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20 mm x 13 mm (Länge x Breite). Anschließend wurde mit einem Gewicht von 2 kg das Klebeband viermal auf den Stahlträger gedrückt. Bei Raumtemperatur wurde ein Gewicht von 1 kg an dem Klebeband befestigt und die Zeit bis zum Herunterfallen des Gewichtes gemessen.
Die gemessenen Scherstandzeiten sind in Minuten angegeben und entsprechen dem Mittelwert aus drei Messungen.

### Bestimmung des Gelanteils (Test B)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert, also der nicht in Toluol lösliche Gewichtsanteil des Polymers bestimmt.

### 180° Klebkrafttest (Test C)

Ein 20 mm breiter Streifen einer auf einer Polyester geschichteten Acrylathaftklebemasse wurde auf zweimal mit Aceton und einmal mit Isopropanol gewaschenen Stahlplatten aufgebracht. Der Haftklebestreifen wurde zweimal mit einem Gewicht von 2 kg auf das Substrat aufgedrückt. Das Klebeband wurde anschließend sofort mit einer Geschwindigkeit von 300 mm/min und in einem Winkel von 180° vom Substrat abgezogen. Alle Messungen wurden bei Raumtemperatur unter klimatisierten Bedingungen durchgeführt.
Die Meßergebnisse sind in N/cm angegeben und sind gemittelt aus drei Messungen.

### Herstellung und Vernetzung der Proben

### Teil I: Zumischung von Esacure KIP 150^{™}

### Herstellung des Referenz-Polyacrylates

Ein für radikalische Polymerisationen konventioneller 200 L-Reaktor wurde mit 3,84 kg Acrylsäure, 8,32 kg N-tert.-Butylacrylamid, 7,84 kg Methylacrylat, 60 kg 2-Ethylhexylacrylat und 60 kg Aceton/Isopropanol (96:4) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AlBN hinzugegeben. Die Reaktion wurde nach 48 h Reaktionszeit abgebrochen und auf Raumtemperatur abgekühlt.

### UV-Bestrahlung

Zur UV-Bestrahlung wurde eine UV-Anlage der Fa. Eltosch verwendet. Die Anlage ist ausgerüstet mit einem Hg-UV-Mitteldruckstrahler mit einer Intensität von 120 W/cm. Die Lappenmuster wurden jeweils mit einer Geschwindigkeit von 20 m/min durch die Anlage gefahren, wobei zur Erhöhung der Bestrahlungsdosis die Muster in mehreren Durchgängen bestrahlt wurden.
Die dabei protokollierte UV-Dosis ist in J/cm² angegeben.

### Beispiel I/1:

Die Haftklebemasse wurde mit 0,5 Gew.-% Esacure KIP 150^{™} (Fa. Lamberti) abgemischt und anschließend in einem Einschneckenextruder (Fa. Berstorff) aufkonzentriert. Die Drehzahl der Schnecke betrug 160 U/min, es wurde ein Durchsatz von 55 kg/h realisiert. Zur Aufkonzentration wurde an 3 verschiedenen Domen ein Vakuum angelegt. Die Unterdrücke betrugen jeweils 130 mbar, 75 mbar und 60 mbar, wobei das geringste Vakuum im ersten Dom angelegt wurde. Die Austrittstemperatur des aufkonzetrierten Hotmelts lag bei 130 °C. Zur Beschichtung wurden die Stränge in einer Breitschlitzdüse (Fa. Pröls) aufgeschmolzen. Nach Temperierung bei 120 °C für 48 h wurde auf eine 23 µm dicke und mit einem Saran-Primer versehene PET-Folie beschichtet. Der Masseauftrag betrug 50 g/m². Das Klebebandmuster wurde dann mit der UV-Anlage bestrahlt, wobei die jeweils eingestrahlte Dosis in der Tabelle aufgelistet wird. Zur Ermittlung der Effizienz der Vernetzung wurde jeweils Testmethode B durchgeführt. Zur Überprüfung der klebtechnischen Eigenschaften wurden die Testmethoden A und C angewandt.

### Beispiel I/1a:

Die Haftklebemasse wurde mit 0,5 Gew.-% Speedcure ITX^{™} (Fa. Rahn) abgemischt und anschließend analog zu Beispiel 1 vorgegangen. Das Klebebandmuster wurde mit der UV-Anlage bestrahlt, wobei die jeweils eingestrahlte Dosis in der Tabelle aufgelistet wird. Zur Ermittlung der Effizienz der Vernetzung wurde jeweils Testmethode B durchgeführt.

### Beispiel I/1b:

Die Haftklebemasse wurde mit 0,5 Gew.-% Irgacure 819^{™} (Fa. Ciba Geigy) abgemischt und anschließend analog zu Beispiel 1 vorgegangen. Das Klebebandmuster wurde mit der UV-Anlage bestrahlt, wobei die jeweils eingestrahlte Dosis in der Tabelle aufgelistet wird. Zur Ermittlung der Effizienz der Vernetzung wurde jeweils Testmethode B durchgeführt.

### Beispiel I/1c:

Die Haftklebemasse wurde mit 0,5 Gew.-% Irgacure 651^{™} (Fa. Ciba Geigy) abgemischt und anschließend analog zu Beispiel I/1 vorgegangen. Das Klebebandmuster wurde mit der UV-Anlage bestrahlt, wobei die jeweils eingestrahlte Dosis in der Tabelle aufgelistet wird. Zur Ermittlung der Effizienz der Vernetzung wurde jeweils Testmethode B durchgeführt.

### Beispiel I/1d:

Die Haftklebemasse wurde mit 0,5 Gew.-% Irgacure 184^{™} (Fa. Ciba Geigy) abgemischt und anschließend analog zu Beispiel I/1 vorgegangen. Das Klebebandmuster wurde mit der UV-Anlage bestrahlt, wobei die jeweils eingestrahlte Dosis in der Tabelle aufgelistet wird. Zur Ermittlung der Effizienz der Vernetzung wurde jeweils Testmethode B durchgeführt.

### Beispiel I/1e:

Die Haftklebemasse wurde mit 0,5 Gew.-% Irgacure 369^{™} (Fa. Ciba Geigy) abgemischt und anschließend analog zu Beispiel I/1 vorgegangen. Das Klebebandmuster wurde mit der UV-Anlage bestrahlt, wobei die jeweils eingestrahlte Dosis in der Tabelle aufgelistet wird. Zur Ermittlung der Effizienz der Vernetzung wurde jeweils Testmethode B durchgeführt.

### Beispiel I/1f:

Die Haftklebemasse wurde mit 0,5 Gew.-% Speedcure BMDS^{™} (Fa. Rahn) abgemischt und anschließend analog zu Beispiel I/1 vorgegangen. Das Klebebandmuster wurde mit der UV-Anlage bestrahlt, wobei die jeweils eingestrahlte Dosis in der Tabelle aufgelistet wird. Zur Ermittlung der Effizienz der Vernetzung wurde jeweils Testmethode B durchgeführt.

### Beispiel I/2

Ein für radikalische Polymerisationen konventioneller 200 L-Reaktor wurde mit 4,8 kg Acrylsäure, 3,2 kg N-tert.-Butylacrylamid, 9,6 kg Methylacrylat, 62,4 kg 2-Ethylhexylacrylat und 60 kg Aceton/Isopropanol (96:4) befüllt. Nach 45 Minuten Durchleiten mit Stickstoffgas unter Rühren wurde der Reaktor auf 58 °C hochgeheizt und 40 g 2,2'-Azoisobuttersäurenitril (AlBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AlBN hinzugegeben. Die Reaktion wurde nach 48 h Reaktionszeit abgebrochen und auf Raumtemperatur abgekühlt.
Die Haftklebemasse wurde mit 0,5 Gew.-% Esacure KIP 150^{™} (Fa. Lamberti) abgemischt und anschließend in einem Einschneckenextruder (Fa. Berstorff) aufkonzentriert. Die Drehzahl der Schnecke betrug 160 U/min, es wurde ein Durchsatz von 60 kg/h realisiert. Zur Aufkonzentration wurde an 3 verschiedenen Domen ein Vakuum angelegt. Die Unterdrücke betrugen jeweils 160 mbar, 100 mbar und 65 mbar, wobei das geringste Vakuum im ersten Dom angelegt wurde. Die Austrittstemperatur des aufkonzetrierten Hotmelts lag bei 130 °C. Zur Beschichtung wurden die Stränge in einer Breitschlitzdüse (Fa. Pröls) aufgeschmolzen. Nach Temperierung bei 120 °C für 48 h wurde auf eine 23 µm dicke und mit einem Saran-Primer versehene PET-Folie beschichtet. Der Masseauftrag betrug 50 g/m². Das Klebebandmuster wurde dann mit der UV-Anlage bestrahlt, wobei die jeweils eingestrahlte Dosis in der Tabelle aufgelistet wird. Zur Ermittlung der Effizienz der Vernetzung wurde jeweils Testmethode B durchgeführt. Zur Überprüfung der klebtechnischen Eigenschaften wurden die Testmethoden A und C angewandt.

### Beispiel I/3

Es wurde analog Beispiel I/2 vorgegangen. Zur Polymerisation wurden 4,8 kg Acrylsäure, 6,4 kg N-tert.-Butylacrylamid, 12 kg Methylacrylat, 62,4 kg 2-Ethylhexylacrylat und 60 kg Aceton/Isopropanol (96:4) eingesetzt.

### Beispiel I/4

Es wurde analog Beispiel I/2 vorgegangen. Zur Polymerisation wurden 1,2 kg Acrylsäure, 6,4 kg N-tert.-Butylacrylamid, 0,8 kg Maleinsäureanhydrid, 35,8 kg n-Butylacrylat, 35,8 kg 2-Ethylhexylacrylat und 60 kg Aceton/Isopropanol (96:4) eingesetzt.

### Beispiel I/5

Es wurde analog Beispiel I/2 vorgegangen. Zur Polymerisation wurden 0,4 kg Acrylsäure, 6,4 kg N-tert.-Butylacrylamid, 0,8 kg Maleinsäureanhydrid, 72,4 kg 2-Ethylhexylacrylat und 60 kg Aceton/Isopropanol (96:4) eingesetzt.

### Beispiel I/6

Es wurde analog Beispiel I/2 vorgegangen. Zur Polymerisation wurden 8 kg Acrylsäure, 72 kg 2-Ethylhexylacrylat und 60 kg Aceton/Isopropanol (96:4) eingesetzt.

### Teil II: Zumischung von Esacure KIP 150^{™} und Genomer^{™}

### Herstellung des Polyacrylates

Ein für radikalische Polymerisationen konventioneller 200 L-Reaktor wurde mit 0,8 kg Acrylsäure, 6,4 kg N-tert.-Butylacrylamid, 0,8 kg Maleinsäureanhydrid, 36 kg 2-Ethylhexylacrylat, 36 kg n-Butylacrylat und 60 kg Aceton/Isopropanol (97:3) befüllt. Nach 45 Minuten Durchleiten mit Stickstoffgas unter Rühren wurde der Reaktor auf 58 °C hochgeheizt und 40 g 2,2'-Azoisobuttersäurenitril (AlBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AlBN hinzugegeben. Die Reaktion wurde nach 48 h Reaktionszeit abgebrochen, auf Raumtemperatur abgekühlt und letztendlich 0,8 kg Genomer 4212^{™} (Fa. Rahn) hinzugegeben.

### UV-Bestrahlung

Zur UV Bestrahlung wurde eine UV-Anlage der Fa. Eltosch verwendet. Die Anlage ist ausgerüstet mit einem Hg-UV-Mitteldruckstrahler mit einer Intensität von 120 W/cm. Die Lappenmuster wurden mit jeweils 20 m/min durch die Anlage gefahren, wobei zur Erhöhung der Bestrahlungsdosis die Muster in mehreren Durchgängen bestrahlt wurden.

### Beispiel II/1:

Die Haftklebemasse wurde mit 30 Gewichtsanteilen Harz DT 110^{™} (Fa. DRT) und 0,5 Gewichtsanteilen Esacure KIP 150^{™} (Fa. Lamberti) abgemischt und anschließend in einem Einschneckenextruder der Fa. Berstorff aufkonzentriert. Die Drehzahl der Schnecke betrug 160 U/min, damit wurde ein Durchsatz von 60 kg/h realisiert. Zur Aufkonzentration wurde an 3 verschiedenen Domen ein Vakuum angelegt. Die Unterdrücke betrugen jeweils 160 mbar, 70 mbar und 55 mbar. Die Austrittstemperatur des aufkonzentrierten Hotmelts lag bei 110 °C. Anschließend wurden über einen gegenläufig betriebenen Doppelschneckenextruder der Fa. Welding 0,3 Gewichtsanteile Genomer 5248^{™} (Fa. Rahn), bezogen auf das Polymer, bei einer Drehzahl von 320 U/min hinzucompoundiert. Zur Beschichtung wurden die Stränge in einer Breitschlitzdüse der Fa. Pröls aufgeschmolzen, auf eine 23 µm dicke und mit einem Saran-Primer versehene PET-Folie beschichtet. Der Masseauftrag betrug 100 g/m². Das Klebebandmuster wurde dann mit 2 und 4 Durchgängen an der UV-Anlage bestrahlt. Zur Ermittlung der klebtechnischen Daten wurden die Testmethoden A und B durchgeführt.

### Beispiel II/1a:

Die Haftklebemasse wurde mit 30 Gewichtsanteilen Harz DT 110^{™} (Fa. DRT), 0,5 Gewichtsanteilen Esacure KIP 150^{™} (Fa. Lamberti) und 1,0 Gewichtsanteilen Genomer 5248^{™} (Fa. Rahn) abgemischt. Anschließend wurde analog Beispiel II/1 vorgegangen. Die Mischung vergelte im Hotmeltverarbeitungsprozeß und konnte nicht weiter eingesetzt werden.

### Beispiel II/1b:

Die Haftklebemasse wurde mit 30 Gewichtsanteilen Harz DT 110^{™} (Fa. DRT), 0,5 Gewichtsanteilen Esacure KIP 150^{™} (Fa. Lamberti) abgemischt und anschließend wurde analog Beispiel II/1 vorgegangen.

### Beispiel II/1c:

Die Haftklebemasse wurde mit 30 Gewichtsanteilen Harz DT 110^{™} (Fa. DRT), 0,5 Gewichtsanteilen Esacure KIP 150^{™} (Fa. Lamberti) und 0,5 Gewichtsanteilen Genomer 5248^{™} (Fa. Rahn) abgemischt. Die Mischung vergelte im Hotmeltverarbeitungsprozess und konnte nicht weiter eingesetzt werden.

### Beispiel II/2 (Referenz):

Die Haftklebemasse wurde mit 30 Gewichtsanteilen Harz DT 110^{™} (Fa. DRT) und 0,5 Gewichtsanteilen Speedcure ITX^{™} (Fa. Rahn) abgemischt und anschließend in einem Einschneckenextruder der Fa. Berstorff aufkonzentriert. Die Drehzahl der Schnecke betrug 160 U/min und damit wurde ein Durchsatz von 60 kg/h realisiert. Zur Aufkonzentration wurde an 3 verschiedenen Domen ein Vakuum angelegt. Die Unterdrücke betrugen jeweils 160 mbar, 70 mbar und 50 mbar. Die Austrittstemperatur des aufkonzentrierten Hotmelts lag bei ca. 113 °C. Zur Beschichtung wurden die Stränge in einer Breitschlitzdüse der Fa. Pröls aufgeschmolzen. Nach Temperierung auf 140 °C für 1 h wurde auf eine 23 µm dicke und mit einem Saran-Primer versehene PET-Folie beschichtet. Der Masseauftrag betrug 100 g/m². Das Klebebandmuster wurde dann mit 2 und 4 Durchgängen an der UV-Anlage bestrahlt. Zur Ermittlung der klebtechnischen Daten wurden die Testmethoden A und B durchgeführt.

### Beispiel II/3 (Referenz):

Die Haftklebemasse wurde mit 30 Gewichtsanteilen Harz DT 110^{™} (Fa. DRT), 0,5 Gewichtsanteilen Speedcure ITX^{™} (Fa. Rahn) und 0,3 Gewichtsanteilen Genomer 5248^{™} (Fa. Rahn) abgemischt. Es wurde analog Beispiel II/1 vorgegangen.

### Beispiel II/4 (Referenz):

Die Haftklebemasse wurde mit 30 Gewichtsanteilen Harz DT 110^{™} (Fa. DRT) und 0,5 Gewichtsanteilen Irgacure 819^{™} (Fa. Ciba Geigy) abgemischt und anschließend wurde analog Beispiel II/2 vorgegangen.

### Beispiel II/5 (Referenz):

Die Haftklebemasse wurde mit 30 Gewichtsanteilen Harz DT 110^{™} (Fa. DRT), 0,5 Gewichtsanteilen Irgacure 819^{™} (Fa. Ciba Geigy) und 0,3 Gewichtsanteilen Genomer 5248^{™} (Fa. Rahn) abgemischt und anschließend wurde analog Beispiel II/3 vorgegangen.

### Beispiel II/6:

Die Haftklebemasse wurde mit 0,5 Gewichtsanteilen Esacure KIP 150^{™} (Fa. Lamberti) und 0,3 Gewichtsanteilen Genomer 5248^{™} (Fa. Rahn) abgemischt und anschließend wurde analog Beispiel II/3 vorgegangen.

### Beispiel II/7 (Referenz):

Die Haftklebemasse wurde mit 0,5 Gewichtsanteilen Speedcure ITX^{™} (Fa. Rahn) und 0,3 Gewichtsanteilen Genomer 5248^{™} (Fa. Rahn) abgemischt und anschließend wurde analog Beispiel II/3 vorgegangen.

### Beispiel II/8:

Die Haftklebemasse wurde mit 25 Gewichtsanteilen Piccotex 75^{™} , 0,5 Gewichtsanteilen Esacure KIP 150^{™} (Fa. Lamberti) und 0,3 Gewichtsanteilen Genomer 5248^{™} (Fa. Rahn) abgemischt und anschließend wurde analog Beispiel II/3 vorgegangen.

### Beispiel II/9:

Die Haftklebemasse wurde mit 25 Gewichtsanteilen Piccotex 75^{™} (Fa. Hercules), 0,5 Gewichtsanteilen Esacure KIP 150^{™} (Fa. Lamberti) und 0,3 Gewichtsanteilen Genomer 5275^{™} (Fa. Rahn) abgemischt und anschließend wurde analog Beispiel II/3 vorgegangen.

### Beispiel II/10:

Die Haftklebemasse wurde mit 25 Gewichtsanteilen Piccotex 75^{™} (Fa. Hercules), 0,5 Gewichtsanteilen Esacure KIP 150^{™} (Fa. Lamberti) und 0,3 Gewichtsanteilen Genomer 5292^{™} (Fa. Rahn) abgemischt und anschließend wurde analog Beispiel II/3 vorgegangen.

### Resultate

Um die Effizienz des Esacures KIP 150^{™} (Fa. Lamberti) zu demonstrieren, wurden verschiedene alternative UV-Photoinitiatoren im Vergleich getestet. Irgacure 819^{™}, 651^{™}, 184^{™} (Fa. Ciba-Geigy) sind Standardsysteme zur UV-Vernetzung von Polyacrylaten. Speedcure ITX^{™} (Fa. Rahn) gilt als äußerst reaktiver Photoinitiator und wurde daher auch im Vergleich getestet. Die Ergebnisse dieser Untersuchungen sind in Tabelle 1 zusammengefaßt.

| Tabelle 1 | | |
|---|---|---|
| Beispiel | UV-Bestrahlung; Anzahl der Durchgäge | Gelwert [%] |
| I/1 | 0 | 0 |
| I/1 | 1 | 35 |
| I/1 | 2 | 74 |
| I/1a | 0 | 0 |
| I/1a | 1 | 9 |
| I/1a | 2 | 26 |
| I/1b | 0 | 0 |
| I/1b | 1 | 3 |
| I/1b | 2 | 5 |
| I/1c | 0 | 0 |
| I/1c | 1 | 5 |
| I/1c | 2 | 12 |
| I/1d | 0 | 0 |
| I/1d | 1 | 9 |
| I/1d | 2 | 16 |
| I/1e | 0 | 0 |
| I/1e | 1 | 1 |
| I/1e | 2 | 3 |
| I/1f | 0 | 0 |
| I/1f | 1 | 14 |
| I/1f | 2 | 30 |

Mit dem Photoinitiator Esacure KIP 150^{™} (Fa. Lamberti) (Beispiel I/1) wurden eindeutig die besten Ergebnisse erzielt. Bereits mit sehr geringen Dosen ließen sich sehr hohe Gelwerte erzielen, so daß dieser Photoinitiator sehr gut geeignet ist, reine Polyacrylathaftkleber zu vernetzen. Im Vergleich zu den anderen Photoinitatoren wird somit ein erheblich geringer bestrahlungstechnischer Aufwand (Anzahl an UV-Lampen) benötigt, was den Prozeß wirtschaftlich wesentlich vorteilhafter macht.

Weiterhin ist der Tabelle 1 zu entnehmen, daß einige Photoinitiatoren nahezu keine Wirkung für die Vernetzung der Polyacrylate besitzen und daß der Unterschied bezüglich der erreichbaren Gelwerte nach der Vernetzung zwischen mit Esacure KIP 150^{™} initiierten Vernetzungsvorgängen und den anderen Systemen sehr groß ist. Die Effizienzsteigerung ist somit signifikant.
Weiterhin ist bekannt, daß die geringe Flüchtigkeit von Photoinitiatoren ein Problem für den Heißschmelzprozeß (Hotmeltprozeß) darstellt. Bei Verwendung des oligomeren KIP 150 wird diese Flüchtigkeit aufgrund des hohen Molekulargewichts deutlich herabgesetzt; dies ist ein weiterer Vorteil des erfinderischen Verfahrens für die Hotmelt-Verarbeitbarkeit.

Zur Demonstration der generellen Anwendbarkeit auf Acrylatheißschmelzmassen wurden mehrere Polyacrylate hergestellt, mit Esacure KIP 150^{™} abgemischt und anschließend im Hinblick auf die klebtechnischen Eigenschaften insbesondere für die spätere Verwendung als Haftklebeband untersucht.

Die Ergebnisse der klebtechnischen Ausprüfungen für die UV-vernetzten Polyacrylate sind in der Tabelle 2 dargestellt.

| Beispiel | UV-Bestrahlung; Anzahl der Durchgänge | SSZ RT, 10 N [min] | KK-Stahl, [N/cm] | Gelwert [%] |
|---|---|---|---|---|
| I/1 | 2 | +10000 | 5.1 | 74 |
| I/2 | 2 | +10000 | 4.8 | 75 |
| I/3 | 2 | +10000 | 4.6 | 76 |
| I/4 | 2 | 6780 | 5.2 | 74 |
| I/5 | 2 | 2450 | 5.6 | 72 |
| I/6 | 2 | +10000 | 4.7 | 68 |

| | | | | |
|---|---|---|---|---|
| SSZ: Scherstandzeit RT: Raumtemperatur KK: Klebkraft | | | | |

Die Ergebnisse in Tabelle 2 belegen, daß diverse reine und gesättigte Polyarcylathaftklebemassen ohne weitere Zusätze mit Esacure KIP 150^{™} effizient vernetzt werden können. Für polare Acrylathaftklebemassen wird eine sehr gute Kohäsion erzielt. Die Gelwerte liegen mit 2 Durchgängen der UV-Bestrahlung bei etwa 70 %. In Verbindung mit der guten Thermostabilität und der niedrigen Flüchtigkeit durch das hohe mittlere Molekulargewicht ergibt sich ein deutlicher Vorteil gegenüber konventionellen Photoinitiatoren.

Um die Effizienz der Kombination aus Esacure KIP 150^{™} (Fa. Lamberti) und dem Polyamin Genomer 5248^{™} (Fa. Rahn) zu demonstrieren, wurden verschiedene alternative UV-Photoinitiatoren im Vergleich getestet. Irgacure 819^{™} (Fa. Ciba-Geigy) ist das Standardsystem zur UV-Vernetzung von Polyacrylaten. Speedcure ITX^{™} (Fa. Rahn) gilt als äußerst reaktiver Photoinitiator und wurde daher ebenfalls im Vergleich getestet. Die Referenzen wurden jeweils mit und ohne Beschleuniger Genomer 5248^{™} (Fa. Rahn) untersucht. Die Ergebnisse dieser Untersuchungen sind in Tabelle 1 zusammengefaßt.

| Tabelle 1 | | | |
|---|---|---|---|
| Beispiel | Anzahl der Durchgänge für die UV-Bestrahlung | Gelwert [%] | SSZ RT, 10 N[min] |
| II/1 | 0 | 0 | 19 |
| II/1 | 2 | 10 | +10000 |
| II/1 | 4 | 14 | +10000 |
| II/1b | 0 | 0 | 0 |
| II/1b | 2 | 2 | 342 |
| II/1b | 4 | 6 | 485 |
| II/2 | 0 | 0 | 34 |
| II/2 | 2 | 0 | 175 |
| II/2 | 4 | 2 | 264 |
| II/3 | 0 | 0 | 15 |
| II/3 | 2 | 4 | 1478 |
| II/3 | 4 | 12 | 7640 |
| II/4 | 0 | 0 | 28 |
| II/4 | 2 | 0 | 134 |
| II/4 | 4 | 0 | 235 |
| II/5 | 0 | 0 | 18 |
| II/5 | 2 | 0 | 127 |
| II/5 | 4 | 1 | 376 |

| | | | |
|---|---|---|---|
| SSZ: Scherstandzeit RT: Raumtemperatur | | | |

Mit der erfindungsgemäßen Kombination aus Esacure KIP 150^{™} (Fa. Lamberti) und 0,3 Gewichtsanteilen Genomer 5248^{™} (Fa. Rahn) als Initiatorsystem wurden die besten Ergebnisse erzielt. Nach 2 UV-Durchgängen wurde bereits ein Gelwert von 10 % erreicht, der dem System eine hohe Scherfestigkeit gibt Dennoch zeigte die Abmischung mit zu hohen Anteilen Aminbeschleuniger, daß dann eine Vergelung über die Carbonsäuregruppen einsetzt, so daß die synergistischen Effekte aus Photoinitiator und Aminbeschleuniger nur bei einem Gewichtsanteil des Genomers 5248^{™} von < 0,5 und > 0 genutzt werden können.
Die beiden anderen Photoinitiatorsysteme (Irgacure 819^{™} und Speedcure ITX^{™}) sind bedeutend weniger reaktiv und benötigen eine weitaus höhere UV-Strahlendosis. Weiterhin ist der Zusatz an Beschleunigersubstanz essentiell, da unter Standardbedingungen sonst nahezu keine Vernetzung eintritt.

Die Ergebnisse der klebtechnischen Ausprüfungen für die reinen Polyacrylate (Beispiele II/6 und II/7) sind in der Tabelle 2 dargestellt.

| Tabelle 2 | | | |
|---|---|---|---|
| Beispiel | Anzahl der Durchgänge für die UV-Bestrahlung | Gelwert [%] | SSZ RT, 10 N[min] |
| II/6 | 0 | 29 | 1588 |
| II/6 | 2 | 76 | 505 |
| II/6 | 4 | 79 | 448 |
| II/7 | 0 | 29 | 1256 |
| II/7 | 2 | 67 | 908 |
| II/7 | 4 | 76 | 292 |

| | | | |
|---|---|---|---|
| SSZ: Scherstandzeit RT: Raumtemperatur | | | |

Die Ergebnisse in Tabelle 2 belegen, daß auch reine Polyarylatsysteme mit der erfindungsgemäßen Photoinitiator/Beschleuniger-Kombination effizient vernetzt werden können. Der Vergleich von Esacure KIP 150^{™} mit Speedcure ITX^{™} zeigt auch für die reinen Polyacrylate eine höhere Effizienz für KIP 150^{™}. Insbesondere bei einer geringeren Strahlungsdosis ist Esacure KIP 150^{™} reaktiver als Speedcure ITX^{™}, was sich in einem schneller ansteigenden Gelwert äußert. Bezugnehmend auf die Scherfestigkeit werden die reinen Polyacrylatsysteme schon bei relativ geringer Bestrahlung übervernetzt, so daß die in Tabelle 2 bestrahlten Muster alle adhäsiv versagen und daher die gemessenen Werte relativ gering sind.

Die Ergebnisse der klebtechnischen Ausprüfungen der Beispiele II/8 bis II/10 sind in der Tabelle 3 dargestellt.

| Tabelle 3 | | | |
|---|---|---|---|
| Beispiel | Anzahl der Durchgänge für die UV-Bestrahlung | Gelwert [%] | SSZ RT, 10 N[min] |
| II/8 | 0 | 0 | 122 |
| II/8 | 2 | 11 | 2354 |
| II/8 | 4 | 18 | 6759 |
| II/9 | 0 | 0 | 134 |
| II/9 | 2 | 12 | 2183 |
| II/9 | 4 | 20 | 7140 |
| II/10 | 0 | 0 | 98 |
| II/10 | 2 | 13 | 2542 |
| II/10 | 4 | 22 | 8025 |

| | | | |
|---|---|---|---|
| SSZ: Scherstandzeit RT: Raumtemperatur | | | |

Die Beispiele II/8 bis II/10 belegen, daß auch weitere harzabgemischte Polyacrylat-Heißschmelzhaftklebemassen mit der erfindungsgemäßen Kombination aus Beschleuniger und Photoinitiator Esacure KIP 150^{™} effizient vernetzt werden können, ohne daß die regelnde Wirkung der Harze während der Vernetzung diesen Prozeß stark beeinträchtigt. In allen Fällen steigt durch die UV-Bestrahlung die Kohäsion der Haftklebemasse stark an und die erzielten Werte liegen mit 4 Durchgängen in dem Bereich für die optimale Vernetzung. Weiterhin belegen die Beispiele II/8 bis II/10, daß auch unterschiedliche Beschleuniger eingesetzt werden können.

Zusammenfassend kann festgestellt werden, daß durch das erfinderische Verfahren unerwartet ein extrem stabiles vernetzbares Acrylatheißschmelzsystem zur Verfügung steht, welches eine sehr hohe Topfzeit aufweist. Für gesättigte Systeme steht hiermit eine effiziente Vernetzungsmethode, selbst bei Anwesenheit von Additiven, Harzen und dergleichen, zur Verfügung. Eine Vergelungsreaktion findet - im Gegensatz zu Systemen, welche durch polymeranaloge Reaktionen hergestellt werden - so gut wie nicht statt.
Durch Zugabe von (oligomeren) Aminacrylaten kurz vor der Beschichtung läßt sich die Vernetzung noch verbessern.

## Patentansprüche

1. Verfahren zur Herstellung einer Polyacrylathaftklebemasse über ein Heißschmelzverfahren, **dadurch gekennzeichnet, daß**
ein oligomer vorliegender polyfunktioneller α-Spalter vor der Verarbeitung im Heißschmelzverfahren zu dem zu vernetzenden Polymer gegeben wird und die UV-Vernetzung nach der Verarbeitung im Heißschmelzverfahren durchgeführt wird,
wobei das zu vernetzende Polymer ein gesättigtes System ist.

2. Verfahren nach Anspruch 1, **dadurch gekennzeichnet, daß**
als α-Spalter ein α-Hydroxyketon, insbesondere Oligo[2-hydroxy-2-methyl-1-[4-(1-methylvinyl)phenyl]propanon], eingesetzt wird.

3. Verfahren nach zumindest einem der vorangehenden Ansprüche, **dadurch gekennzeichnet, daß**
der α-Spalter zu 0,25 bis 1 Gew.-%, bezogen auf das zu vernetzende Polymer, eingesetzt wird.

4. Verfahren nach zumindest einem der vorangehenden Ansprüche, **dadurch gekennzeichnet, daß**
zur Herstellung des zu vernetzenden Polymers eine Monomermischung enthaltend zumindest die folgenden Komponenten eingesetzt wird:
a) 65 bis 100 Gew.% (Meth-)acrylsäure und (Meth-)Acrylsäurederivate der allgemeinen Formel 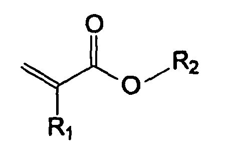 wobei R₁ = H oder CH₃ und R₂ eine Alkylkette mit 2 bis 20 C-Atomen ist,
b) 0 bis 35 Gew.% Vinylverbindungen mit funktionellen Gruppen,
so daß die Summe aller eingesetzten Komponenten 100 Gew.% ergibt.

5. Verfahren nach zumindest einem der vorangehenden Ansprüche, **dadurch gekennzeichnet, daß**
zu dem zu vernetzenden Polymer weiterhin 0,5 bis 40 Gew.-% eines oder mehrere Harze und/oder 0,1 bis 0,3 Gew.% eines oder mehrerer - insbesondere oligomerer - Aminacrylate, jeweils bezogen auf das zu vernetzende Polymer, zugegeben sind.

6. Verfahren nach zumindest einem der vorangehenden Ansprüche, **dadurch gekennzeichnet, daß**
die UV-Vernetzung mittels kurzzeitiger ultravioletter Bestrahlung in einem Wellenlängenbereich von 200 bis 400 nm, insbesondere unter Verwendung von Quecksilber-Hochdruck- oder -Mitteldruck-Lampen bei einer Leistung von 80 bis 200 W/cm, bewirkt wird.

7. Verwendung eines oligomer vorliegenden polyfunktionellen α-Spalters, besonders eines α-Hydroxyketons, insbesondere von Oligo[2-hydroxy-2-methyl-1-[4-(1-methylvinyl)-phenyl]propanon], als UV-Initiator für die Vernetzung von den Heißschmelzprozeß durchlaufende gesättigte Polyacrylathaftklebemassen, wobei der α-Spalter nicht in das zu vernetzende Polymer einpolymerisiert ist.

## Claims

1. Process for preparing a polyacrylate pressure-sensitive adhesive by way of a hotmelt process **characterized in that**
a polyfunctional α-cleaver present in oligomeric form is added to the polymer to be crosslinked, prior to processing by the hotmelt process, and the UV crosslinking is carried out after processing by the hotmelt process,
the polymer to be crosslinked being a saturated system.

2. Process of Claim 1, **characterized in that**
the α-cleaver used is an α-hydroxy ketone, especially oligo[2-hydroxy-2-methyl-1-[4-(1-methylvinyl)phenyl]-propanone].

3. Process of at least one of the preceding claims, **characterized in that**
the α-cleaver is used at from 0.25 to 1% by weight, based on the polymer to be crosslinked.

4. Process for at least one of the preceding claims, **characterized in that**
the polymer to be crosslinked is prepared using a monomer mixture comprising at least the following components:
a) 65 to 100% by weight of (meth)acrylic acid and (meth)acrylic acid derivatives of the general formula 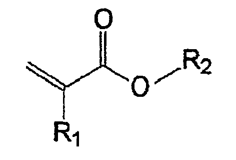 where R₁ = H or CH₃ and R₂ is an alkyl chain having 2 to 20 carbon atoms,
b) 0 to 35% by weight of vinyl compounds containing functional groups,
so that the sum of all of the components used is 100% by weight.

5. Process of at least one of the preceding claims, **characterized in that**
the polymer to be crosslinked has added to, in addition, 0.5 to 40% by weight of one or more resins and/or 0.1 to 0.3% by weight of one or more amine acrylates- especially oligomeric amine acrylates-based in each case on the polymer to be crosslinked.

6. Process of at least one of the preceding claims, **characterized in that**
UV crosslinking is brought about by means of brief ultraviolet irradiation within a wavelength range from 200 to 400 nm, in particular using high-pressure or medium-pressure mercury lamps with an output of from 80 to 200 W/cm.

7. Use of a polyfunctional α-cleaver in oligomeric form, in particular an α-hydroxy ketone, especially oligo[2-hydroxy-2-methyl-1-4-(1-methylvinyl)-phenyl] propanone], as UV initiator for the crosslinking of saturated polyacrylate pressure-sensitive adhesives passing through the hotmelt process, where the
α-cleaver is not copolymerized into the polymer to be crosslinked.

## Revendications

1. Procédé de production de pâtes adhésives de contact de polyacrylate par un procédé de fusion à chaud, **caractérisé en ce que** l'on ajoute au polymère à réticuler un coupeur-α polyfonctionnel se présentant sous forme d'oligomère avant la mise en oeuvre dans le procédé de fusion à chaud et la réticulation par les UV est effectuée après la mise en oeuvre dans le procédé de fusion à chaud, le polymère à réticuler étant un système saturé.

2. Procédé selon la revendication 1, **caractérisé en ce que** l'on utilise comme coupeur-α une α-hydroxycétone, en particulier l'oligo [2-hydroxy-2-méthyl-1-[4-(1-méthylvinyl)phényl]propanone].

3. Procédé selon au moins l'une quelconque des revendications précédentes, **caractérisé en ce que** le coupeur-α est utilisé à raison de 0,25 à 1% en poids, rapporté au polymère à réticuler.

4. Procédé selon au moins l'une quelconque des revendications précédentes, **caractérisé en ce que** l'on utilise, pour la production du polymère à réticuler, un mélange de monomères contenant au moins les composants suivantes :
a) 65 à 100% en poids d'acide (méth)acrylique et de dérivés d'acide (méth)acrylique de formule générale 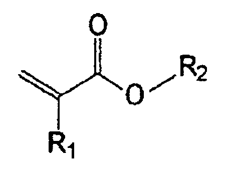 dans laquelle R₁ - H ou CH₃ et R₂ une chaîne alkyle comportant 2 à 20 atomes de carbone,
b) 0 à 35% en poids de composés vinyliques comportant des groupes fonctionnels,
de telle sorte que la somme de tous les composants utilisés représente 100% en poids.

5. Procédé selon au moins l'une quelconque des revendications précédentes, **caractérisé en ce qu'** on ajoute encore au polymère à réticuler 0,5 à 40% en poids d'une ou plusieurs résine(s) et/ou 0,1 à 0,3% en poids d'un ou plusieurs acrylate (s) d'amine(s) (en particulier oligomère(s)), à chaque fois rapporté au polymère à réticuler.

6. Procédé selon au moins l'une quelconque des revendications précédentes, **caractérisé en ce que** la réticulation par les UV est effectuée au moyen d'une irradiation ultraviolette de courte durée dans une plage de longueur d'onde de 200 à 400 nm, en particulier avec utilisation de lampes à mercure haute-pression ou moyenne-pression, à une puissance de 80 à 200 W/cm.

7. Utilisation d'un coupeur-α polyfonctionnel se présentant sous forme d'oligomère, en particulier d'une α-hydroxycétone, en particulier de l'oligo[2-hydroxy-2-méthyl-1-[4-(1-méthyl-vinyl)-phényl]propanone], comme initiateur d'UV pour la réticulation des pâtes adhésives de contact de polyacrylate saturées soumises au procédé de fusion à chaud, le coupeur-α n'étant pas polymérisé dans le polymère à réticuler.
